# NEUE EUROPÄISCHE PATENTSCHRIFT

(11) **EP 1 002 621 B2**
(45) Veröffentlichungstag und Bekanntmachung des Hinweises auf die Entscheidung über den Einspruch: **18.04.2007**
(45) Hinweis auf die Patenterteilung: 08.10.2003
(21) Anmeldenummer: 98811153.0
(22) Anmeldetag: 20.11.1998
(51) Int. Cl.: B23Q 1/62

(54) **Vorrichtung zur Erzeugung einer Relativbewegung**
Device for producing relative motion
Dispositif pour la réalisation d'un mouvement relatif

(43) Veröffentlichungstag der Anmeldung: 24.05.2000
(73) Patentinhaber: Mikron SA Agno, 6903 Lugano 3 (CH)
(72) Erfinder: Geiger, Michael, Dipl.-Ing., 82319 Starnberg (DE); Treib, Thomas, Dr., 6903 Lugano (CH); Meier, Peter, Dipl.-Ing., 9403 Goldach (CH)
(74) Vertreter: Roshardt, Werner Alfred

(56) Entgegenhaltungen:
- EP-A- 0 281 754
- EP-A- 0 542 194
- EP-A- 0 780 181
- EP-A- 0 816 012
- DE-A- 19 507 989
- DE-C- 2 836 706
- DE-C- 2 838 704
- DE-U- 29 611 587
- GB-A- 1 285 914
- US-A- 4 094 102
- US-A- 4 335 637
- US-A- 5 241 794
- PATENT ABSTRACTS OF JAPAN vol. 11, no. 86 (M-572) [2533], 17. März 1987 & JP 61 241055 A (MATSUSHITA ELECTRIC IND CO LTD), 27. Oktober 1986
- Kapital 1.2.2 "maschinenkonzepte mit neuen Kinematiken" des Ergebnisberichts zum "Neue Maschine" der Institute ifw, ISW, ZFS.
- "Eine neue Generation der Werkzeugmaschinen" von Prof.-Dr.Ing. Dr.h.c. Uwe Heisel u.a aus "dima-Die Maschine, internationale Fachzeitschrift für Fertigungstechnik", 6.Ausgabe 1996, Seiten 130 bis 137.
- Duden, Deutsches Universalwörterbuch, Ausgabe 1989 zu "Gehäuse"
- Wahrig, Das Deutsche Wörterbuch, Neuausgabe 1994, zu "Gehäuse"

## Beschreibung

### Technisches Gebiet

Die Erfindung betrifft eine Vorrichtung zur Erzeugung einer Relativbewegung zwischen einer Spindeleinrichtung und einem Halteorgan nach Anspruch 1.

### Stand der Technik

Unter einer Spindeleinrichtung wird im folgenden irgend eine Werkzeugmaschineneinrichtung verstanden, die eine Arbeitsspindel zur Erzeugung einer Drehbewegung zwischen einem Werkzeug und einem Werkstück umfasst, um mittels der Drehbewegung das Werkstück mit dem Werkzeug zu bearbeiten. Ohne anderslautende Erklärungen wird unter der Bezeichnung Spindel stets die Arbeits- oder Hauptspindel einer Werkzeugmaschine verstanden. Die Drehbewegung kann entweder durch das Werkzeug (z.B. bei einer Bohrmaschine) oder durch das Werkstück (z.B. bei einer Drehmaschine) ausgeführt werden.

Um eine Spindeleinrichtung translatorisch mit zwei Freiheitsgraden in einer Ebene zu bewegen, wird im Werkzeugmaschinenbau üblicherweise eine Bewegungsvorrichtung nach Art eines Kreuzschlittens verwendet. Dabei wird auf einem ersten Schlitten, welcher eine erste Translationsbewegung entlang einer ersten linearen Achse ermöglicht, ein zweiter Schlitten mitsamt einem Schlittenantrieb angeordnet, um eine zweite Translationsbewegung der Spindeleinrichtung entlang einer zweiten linearen Achse zu ermöglichen, welche üblicherweise rechtwinklig zur ersten linearen Achse angeordnet ist. Bei einer nach Art eines Kreuzschlittens konzipierten Bewegungsvorrichtung für eine Spindeleinrichtung werden sämtliche bei der Werkstückbearbeitung auftretenden Momente und Reaktionskräfte sowohl auf die Antriebs- und Führungseinrichtungen des zweiten als auch auf die Antriebs- und Führungseinrichtungen des ersten Schlittens übertragen. Dies hat zur Folge, dass die erforderlichen Maschinenkomponenten der beiden aufeinander aufbauenden linearen Achsen mit steifen Führungen bzw. Lagerungen in Form von robust gestalteten Maschinenkörpern verwirklicht werden müssen, um die üblicherweise gewünschte Bearbeitungspräzision zu erreichen. Eine solche Bewegungsvorrichtung wird somit gezwungenermassen voluminös und schwer, wobei das grosse Gewicht der zu bewegenden Massen die mit einer solchen Bewegungsvorrichtung erreichbare Dynamik limitiert.

Eine in der GB 1 285 914 beschriebene Fräsmaschine umfasst einen sich im Wesentlichen in horizontaler Richtung erstreckenden, balkenartigen Kreuzkopf, an dessen beiden Längsenden je eine Frässpindel angeordnet ist sowie zwei, je um eine vertikale Drehachse drehbare, Werkstückplattformen. Die Maschine ermöglicht die gleichzeitige Bearbeitung von zwei symmetrischen Werkstücken. Der Kreuzkopf ist ungefähr in der Mitte um eine im Wesentlichen horizontale Schwenkachse X-X schwenkbar auf einem ersten Schlitten gelagert. Der erste Schlitten ist in horizontaler Richtung auf einem zweiten Schlitten verschiebbar, welcher seinerseits in vertikaler Richtung bezüglich des Maschinengestells verschiebbar ist.

Es ist kein Schwenkgelenk zur Schaffung eines translatorischen Freiheitsgrades auf einer Kreisbahn zwischen einem Werkstück und einem Werkzeug vorhanden. Es sind auch nicht zwei unabhängig voneinander ansteuerbare Werkzeugführungen vorgesehen.

Eine Vorrichtung gemäss der US 5,241,794 hat ein Schleifrad, welches auf einem Träger gehalten ist. Der Träger kann um eine vertikale Achse drehen. Aufgrund der konkreten Lage dieser Achse ergibt sich aber nur eine rotative Bewegung der Schleifradfläche um diese Achse und nicht eine translatorische Bewegung.

Damit eine solche Drehbewegung möglich ist, muss ein Basisteil in einen unteren, nicht drehbaren und einen oberen, drehbaren Teil unterteilt werden. Der Basisteil der Spindeleinrichtung, nämlich das Schleifrad und ein weiterer Basisteil eines Halteorgans sind entlang einer Linearführung mit einem ersten translatorischen Freiheitsgrad geradlinig bewegbar. Der Träger ist um eine rechtwinklig zu einer Linearführung angeordnete Schwenkachse schwenkbar. Die Linearführung ist seitlich neben dem ersten Basisteil vorbeilaufend angeordnet. Die Spindeleinrichtung ist parallel zur Schwenkachse verschiebbar.

Es wird bei der US 5,241,794 keine translatorische Bewegung bei einer Drehung um die Achse erzeugt. Wenn die Rotationsbewegung des weiteren Basisteils um die Achse ersetzt wird durch eine Drehbewegung des Schleifkopfes, dann führt der Schleifkopf ebenfalls keine translatorische Kreisbewegung durch, da die Achse direkt durch den Schleifkopf geht. Auch ist der Träger nicht parallel zur Linearführung ausrichtbar, was zu dem widersinnig wäre, da auf diese Weise eine Bearbeitung des Werkstücks gar nicht mehr möglich wäre. Ferner ist die Spindel nicht parallel zur Schwenkachse ausgerichtet.

Aus der Druckschrift US-A-4 094 102 ist eine Trennscheibenanordnung bekannt. Eine Schleif- bzw. Trennscheibe ist um eine Drehachse (Spindelachse) drehbar an einem Längsende eines Trägerarms angeordnet. Der Trägerarm ist um eine Schwenkachse schwenkbar an einem Rahmen angelenkt, der auf einem Paar von Führungsschienen in horizontaler Richtung verschiebbar ist Die Schwenkachse und die Spindelachse sind zueinander parallel und rechtwinklig zur Linearführung angeordnet. Insgesamt wird durch die Führungsschienen ein erster, linearer translatorischer Freiheitsgrad und durch den um die Schwenkachse schwenkbaren Träger ein zweiter, auf einer Kreisbahn verlaufender translatorischer Freiheitsgrad geschaffen.

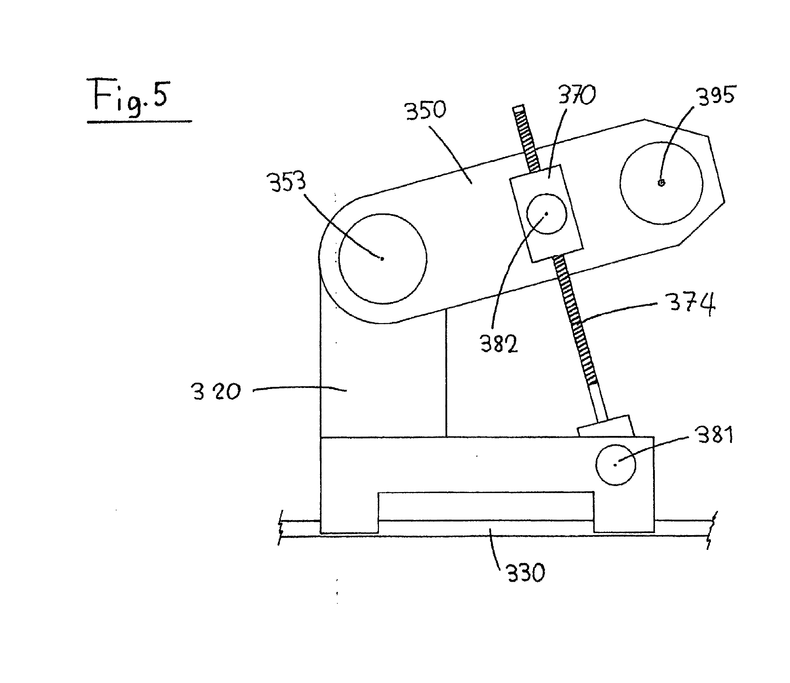

Fig. 5a der Veröffentlichung von U. Heisel et al., "Eine neue Generation der Werkzeugmaschinen?", dima - Die Maschine, internationale Fachzeitschrift für Fertigungstechnik (ISSN 0340-5737; 6. Aug. 1996, S. 130-137), zeigt eine Linearführung, auf welcher zwei Schlitten relativ zueinander verfahrbar sind. Auf dem einen Schlitten ist ein Trägerarm schwenkbar gelagert. Das Schwenklager ist vertikal ausgerichtet, so dass die Schwenkachse senkrecht zur Linearführung verläuft und zwar quasi "durch die Linearführung hindurch". Der Träger erstreckt sich somit seitlich zur Linearführung. Er wird durch ein Gestänge geführt, welches einerseits am zweiten Schlitten und andererseits am freien Ende des Trägers angelenkt ist. Parallel zur Schwenkachse ist ein Werkzeug linear verfahrbar angeordnet.

In der Veröffentlichung von U. Heisel ist die Schwenkachse des Trägers nicht beabstandet über der Linearführung, sondern die Linearführung quasi durchstossend angeordnet beschrieben. Es ist hier grundsätzlich auch nicht möglich, den Träger parallel zur Linearführung auszurichten. Nicht nur würde einer solchen Ausrichtung die Linearführung im Wege sein, sondern es wäre auch keine Betätigung des Werkzeugs mehr möglich ("toter Winkel"). Auch ist die Linearführung nicht seitlich neben dem ersten Basisteil vorbeilaufend angeordnet; der erste Basisteil, welcher das Werkstück trägt, ist unter der Linearführung angeordnet.

In der DE 28 38 704 C1 ist eine Führungsbahnkonstruktion einer Vorschubeinrichtung für Werkzeugmaschinen beschrieben. Es ist hier auf einer horizontalen Linearführung, welche durch zwei beabstandete Stangen gebildet ist, ein Schlitten verfahrbar gelagert. Am vorderen Ende des Schlittens ist eine vertikal ausgerichtete Schwenksäule vorgesehen, an welcher ein Gehäuse als Träger einer Spindeleinrichtung gelagert ist. Die geometrische Schwenkachse des Trägers verläuft senkrecht zur Ebene der Linearführung und quasi diese "durchstossend". Die als Pinole ausgebildete Spindeleinrichtung ist parallel zur Schwenkachse verschiebbar. Die Pinole ist stirnseitig vor der Linearführung gehalten. Der Träger kann parallel zur Längsführung ausgerichtet werden und kann aus dieser Lage nach beiden Seiten verschwenkt werden. Das in der DE 28 38 704 C1 nicht dargestellte Werkstück ist unter der Ebene der Linearführung anzuordnen.

Die Linearführung ist hier nicht seitlich neben der als horizontale Linearführung ausgebildetem Basisteil vorbeilaufend angeordnet. Auch ist als Folge hiervon die Schwenkachse des Trägers nicht beabstandet über der Linearführung, sondern die Ebene der Linearführung quasi "durchstossend" angeordnet.

Die DE 28 36 706 A1 beschreibt eine zur DE 28 38 704 C1 gattungsgemässe Maschine. Für die DE 28 36 706 A1 gilt daher das zur DE 28 38 704 C1 Gesagte sinngemäss. Aus Fig. 1 der DE 28 36 706 A1 ist erkenntlich, dass das Werkstück unter der Ebene der Linearführung anzuordnen ist und nicht seitlich davon.

Zur Erreichung einer grösseren Dynamik der Bewegungsvorrichtungen von Werkzeugmaschinen wurden in den letzten Jahren sogenannte parallele Maschinenkinematiken entwickelt. Bei einer nach dem Konzept einer parallelen Maschinenkinematik konstruierten Werkzeugmaschine sind die Antriebe für die verschiedenen Bewegungsachsen parallel angeordnet, dies im Gegensatz zur oben erwähnten Bewegungsvorrichtung nach Art eines Kreuzschlittens, welche ein Beispiel einer seriellen Maschinenkinematik darstellt. Eine auf einer parallelen Maschinenkinematik basierende Bewegungs- und Positioniervorrichtung für eine Spindeleinrichtung ist z.B. in der Figur 17 der Druckschrift EP-A2-0 791 438 dargestellt. Eine Spindeleinrichtung in Form einer Pinole mit einer in Z-Richtung verstellbaren Hauptspindel wird über acht Verbindungsarme in einem Gestellrahmen festgehalten. Die acht Verbindungsarme sind an einem Ende an der Drehspindeleinheit und am andern Ende je an einem Schlitten angelenkt. Sämtliche acht Schlitten sind je auf einer Linearführung verschiebbar, wobei die acht Linearführungen rechtwinklig zur Z-Richtung angeordnet sind. Durch eine koordinierte Verschiebung der Schlitten kann die Spindeleinrichtung in einer zur Z-Richtung normalen X-Y-Ebene bewegt werden.

Aufgrund der kleineren bewegten Massen ermöglicht die Bewegungsvorrichtung gemäss EP-A2-0 791 438 zwar eine grössere Dynamik als die weiter oben erwähnten Bewegungsvorrichtungen nach Art eines Kreuzschlittens. Zur Herstellung einer Bewegungsvorrichtung gemäss EP-A2-0 791 438 ist jedoch ein grosser konstruktiver Aufwand erforderlich. Es müssen insgesamt acht Linearführungen präzise zueinander angeordnet und insgesamt sechzehn Drehgelenke parallel zueinander ausgerichtet werden, was fertigungstechnisch aufwendig und entsprechend teuer ist. Zudem ist der für die Bewegungsvorrichtung benötigte Bauraum gross im Verhältnis zum nutzbaren Arbeitsraum. Des weiteren gibt es - wie es für parallele Maschinenkinematiken typisch ist - bestimmte ungünstige Zustände der Bewegungsvorrichtung, bei denen für eine kleine Bewegung in eine gewünschte Richtung übermässig grosse Ausgleichsbewegungen einzelner Schlitten erforderlich sind. Dies ist bei der Bewegungsvorrichtung gemäss EP-A2-0 791 438 beispielsweise dann der Fall, wenn ein Verbindungsarm einen flachen Winkel mit seiner zugeordneten Linearführung einschliesst und die Spindeleinrichtung im wesentlichen senkrecht zu dieser Linearführung bewegt werden muss.

### Darstellung der Erfindung

Aufgabe der vorliegenden Erfindung ist die Schaffung einer Vorrichtung zur Erzeugung einer Relativbewegung zwischen einer Spindeleinrichtung und einem Halteorgan. Die Bewegungsvorrichtung soll einfach in der Herstellung und dynamisch sein und zudem ein grosses Verhältnis von nutzbarem Arbeitsraum zum benötigten Bauraum aufweisen.

Gemäss der Erfindung weist eine Vorrichtung zur Erzeugung einer Relativbewegung mit zwei translatorischen Freiheitsgraden zwischen einer Spindeleinrichtung, deren Spindel ein erstes Teil eines aus einem Werkstück und einem Werkzeug gebildeten ersten Teilepaares trägt, und einem Halteorgan zum Halten des zweiten Teiles des ersten Teilepaares, ein erstes Basisteil auf, an welchem ein erstes Teil eines aus der Spindeleinrichtung und dem Halteorgan gebildeten zweiten Teilepaares angebracht ist. Die Bewegungsvorrichtung umfasst weiter ein zweites Basisteil, wobei wenigstens eines der beiden Basisteile bezüglich des anderen entlang einer Linearführung mit einem ersten translatorischen Freiheitsgrad geradlinig bewegbar ist. Am zweiten Basisteil ist ein Träger zum Tragen des zweiten Teils des zweiten Teilepaares mittels eines Schwenkgelenks um eine rechtwinklig zur Linearführung angeordnete Schwenkachse schwenkbar derart angelenkt, dass das zweite Teil des zweiten Teilepaares durch eine Betätigung des Schwenkgelenks mit einem zweiten translatorischen Freiheitsgrad auf einer Kreisbahn bewegbar ist. Die Linearführung ist seitlich neben dem ersten Basisteil vorbeilaufend angeordnet. Die Spindel ist parallel zur Schwenkachse ausgerichtet. Die Spindeleinrichtung ist mittels einer Antriebs- und Führungseinrichtung parallel zur Schwenkachse in Bezug auf das Halteorgan verschiebbar. Der Träger ist im Wesentlichen parallel zur Linearführung ausrichtbar.

Die bei der Bearbeitung des Werkstückes mit dem Werkzeug entstehenden Reaktionskräfte und Momente werden durch das Schwenkgelenk aufgenommen, welches steif und massiv ausgebildet ist. Das steife Schwenkgelenk ermöglicht eine Gelenkbewegung mit genau einem rotativen Freiheitsgrad. Sämtlichen anderen Bewegungen bietet es aufgrund seiner Steifigkeit einen weitgehend unnachgiebigen Widerstand. Dadurch wird gewährleistet, dass auf eine Antriebseinrichtung für die Bewegung mit dem zweiten translatorischen Freiheitsgrad (d.h. auf eine Antriebseinrichtung zur Betätigung des Schwenkgelenks) im wesentlichen bloss Reaktionskräfte übertragen werden, die in Richtung dieser Bewegung mit dem zweiten translatorischen Freiheitsgrad wirken. Sämtliche übrigen Reaktionskräfte und Momente der bei der Bearbeitung des Werkstückes mit dem Werkzeug entstehenden Reaktionskräfte und Momente werden durch das steife Schwenkgelenk aufgenommen. Die Antriebsmittel für den zweiten translatorischen Freiheitsgrad müssen deshalb bloss in derjenigen Richtung steif ausgebildet sein, in welcher sie das Gelenk betätigen. Deshalb können die Antriebsmittel für den zweiten translatorischen Freiheitsgrad im Vergleich zu den entsprechenden Antriebsmitteln bei einer nach Art eines Kreuzschlittens konzipierten Bewegungsvorrichtung leicht ausgebildet sein.

Bei der Fertigung einer Bewegungsvorrichtung gemäss der Erfindung muss im wesentlichen bloss ein einziges Schwenkgelenk mit grosser Präzision rechtwinklig zu einer Linearführung ausgerichtet werden. Dies bedeutet eine starke Vereinfachung der Fertigung im Vergleich zur Fertigung einer Bewegungsvorrichtung gemäss EP-A2-0 791 438. Weil das zweite Teil des zweiten Teilepaares durch den Träger bloss von einer Seite her getragen werden muss, ist mit einer erfindungsgemässen Bewegungsvorrichtung zudem ein grösseres Verhältnis von nutzbarem Arbeitsraum zum benötigten Bauraum erreichbar als mit einer Bewegungsvorrichtung gemäss EP-A2-0 791 438.

Die Linearführung der erfindungsgemässen Bewegungsvorrichtung kann an einer Basisstruktur angeordnet sein. Die Basisstruktur kann aus einem Gehäuse einer Werkzeugmaschine, einem Trägerrahmen, einer Montageplattform oder einer anderen Grundstruktur bestehen. Sie definiert lediglich die Bezugsbasis für die Relativbewegung der erfindungsgemässen Bewegungsvorrichtung. Die Linearführung kann horizontal, vertikal oder unter einem beliebigen schrägen Winkel an der Basisstruktur angeordnet sein. Durch die Anordnung der Linearführung unter einem schrägen Winkel kann im Falle einer spanenden Werkstückbearbeitung ein besonders vorteilhafter Spänefall erreicht werden.

Eine Bewegungsvorrichtung gemäss der Erfindung zeichnet sich vorzugsweise durch Antriebsmittel zur Betätigung des wenigstens einen entlang der Linearführung beweglichen Basisteils aus, welche eine zur Linearführung parallele Antriebsspindel und eine am beweglichen Basisteil angebrachte Mutter umfassen, wobei die Antriebsspindel und die Mutter derart angeordnet und ausgebildet sind, dass sie nach Art eines Spindel-Mutter-Triebes (vorzugsweise vom Typ einer Kugelumlaufspindel) zusammenwirken. Es können jedoch auch andere geeignete Antriebsmittel zum Antreiben des beweglichen Basisteils entlang der Linearführung verwendet werden, beispielsweise Antriebsmittel in Form eines oder mehrerer Linearmotoren.

Bei einer bevorzugten Ausführungsart der Erfindung ist der Träger derart am zweiten Basisteil angeordnet, dass er im wesentlichen parallel zur Linearführung ausrichtbar ist, wobei unter der Richtung des Trägers (oder Trägerrichtung) im Zuge der vorliegenden Beschreibung und der Patentansprüche stets die zur Schwenkachse parallele Projektion der Richtung vom Schwenkgelenk zum Bearbeitungspunkt des zweiten Teils des zweiten Teilepaares auf eine zur Schwenkachse normale Ebene zu verstehen ist.

Bei einer bevorzugten Erfindungsvariante sind der Träger und das zweite Basisteil derart ausgebildet, dass der Träger in einem Winkelbereich von 90 Grad um die Schwenkachse herum schwenkbar ist. Bei einer anderen bevorzugten Erfindungsvariante sind der Träger und das zweite Basisteil derart ausgebildet, dass dieser Winkelbereich 60 Grad beträgt. Für eine gegebene Bewegungsvorrichtung wird durch einen grossen Winkelbereich ein entsprechend grosser nutzbarer Arbeitraum geschaffen. Ein grosser Winkelbereich erweist sich somit als Vorteil hinsichtlich des Verhältnisses von benötigtem Bauraum zum nutzbaren Arbeitsraum der Bewegungsvorrichtung. Andrerseits gibt es bei einem grossen Winkelbereich vermehrt ungünstige Zustände der Bewegungsvorrichtung, bei denen für kleine Bewegungen in eine bestimmte Richtung übermässig grosse Ausgleichsbewegungen von einzelnen Antrieben erforderlich sind. Der beste Kompromiss zwischen nutzbarem Arbeitsraum und kleinen Ausgleichsbewegungen hängt von der jeweiligen Anwendung ab.

Bei einer bevorzugten Erfindungsvariante mit parallel zur Linearführung ausrichtbarem Träger sind der Träger und das zweite Basisteil derart ausgebildet, dass der Träger in einem Winkelbereich um die Schwenkachse herum schwenkbar ist, der durch einen ersten, um 40 Grad von der Parallelrichtung zur Linearführung auf eine erste Seite abweichenden Winkel und durch einen zweiten, um -20 Grad von der Parallelrichtung zur Linearführung auf die andere Seite abweichenden Winkel der Trägerrichtung definiert wird. Bei einer anderen bevorzugten Ausführungsart der Erfindung wird dieser Winkelbereich durch eine um 30 Grad auf eine Seite und um -30 Grad auf die andere Seite von der Parallelrichtung zur Linearführung abweichende Trägerrichtung definiert. Üblicherweise ist die Schwenkbewegung des Trägers auf eine Seite durch die Linearführung begrenzt. In diesem Fall kann bei einem asymmetrischen Winklebereich einer vorgegebenen Grösse die Schwenkachse (und somit der Schwerpunkt der Bewegungsvorrichtung) näher bei der Linearführung angeordnet werden als bei einem gleich grossen symmetrischen Winkelbereich. Dies erweist sich als vorteilhaft hinsichtlich der Steifigkeit der Bewegungsvorrichtung. Hingegen wird durch einen symmetrischen Winkelbereich ein ausgeglichenerer Bewegungsablauf ermöglicht als bei einem asymmetrischen Winkelbereich. Die Optimierung des Winkelbereichs hängt wiederum von der jeweiligen Anwendung ab.

Durch eine Betätigung der Bewegungsvorrichtung derart, dass die Trägerrichtung stets innerhalb dieser Winkelbereichs liegt, wird gewährleistet, dass die Bewegungsvorrichtung keine ungünstigen Zustände einnehmen kann, bei denen für eine kleine Bewegung des zweiten Teils des zweiten Teilepaares in eine gewünschte Richtung übermässig grosse Ausgleichsbewegungen durch die der Antriebsmittel erforderlich sind. Gemäss einer anderen bevorzugten Erfindungsvariante ist der vom Träger bezüglich einer Parallelen zur Linearführung einnehmbare Winkelbereich sogar auf 45 Grad Abweichung auf die eine und auf 15 Grad Abweichung auf die andere Seite dieser Parallelen beschränkt.

Vorzugsweise ist das zweite Basisteil (an welchem der Träger angelenkt ist) entlang der Linearführung geradlinig bewegbar. Das erste Basisteil kann dann fest mit der Basisstruktur verbunden oder sogar als integraler Bestandteil der Basisstruktur ausgebildet sein.

Gemäss einer bevorzugten Variante der Erfindung ist die Arbeitsspindel der Spindeleinrichtung, die entweder durch das Halteorgan am ersten Basisteil gehalten oder durch den Träger am zweiten Basisteil getragen wird, parallel zur Schwenkachse des Schwenkgelenks angeordnet, mittels welchem der Träger am zweiten Basisteil angelenkt ist. Diese Anordnung weist den Vorteil auf, dass es für die Werkstückbearbeitung unerheblich ist, ob die durch das zweite Teil des zweiten Teilepaares ausgeführte Translationsbewegung (auf einer Kreisbahn mit der Schwenkachse als Zentrum) mit einer Rotationsbewegung (um die Schwenkachse herum) gekoppelt ist oder nicht, da die Werkstückbearbeitung in Bezug auf die Arbeitsspindel ohnehin rotationssymmetrisch erfolgt. Der Träger einer entsprechenden Bewegungsvorrichtung kann dann in besonders einfacher Weise ausgebildet sein: er kann als im wesentlichen einstückiger Arm ausgebildet sein, welcher mittels bloss eines einzigen Schwenkgelenks am zweiten Basisteil angelenkt ist. Diese Ausführungsart der Erfindung ist beispielsweise für eine Bohrspindel oder für eine Pinole in vorteilhafter Weise verwendbar.

Gemäss einer anderen bevorzugten Variante der Erfindung ist die Arbeitsspindel der Spindeleinrichtung, die entweder durch das Halteorgan am ersten Basisteil gehalten oder durch den Träger am zweiten Basisteil getragen wird, senkrecht zur Schwenkachse des Schwenkgelenks angeordnet, mittels welchem der Träger am zweiten Basisteil angelenkt ist. Diese Erfindungsvariante eignet sich besonders für den Fall einer vertikal angeordneten Linearführung der Bewegungsvorrichtung.

Vorteilhafterweise ist der Träger nach Art eines Kastens ausgebildet, um eine dreidimensionale Tragstruktur mit einer hohen Steifigkeit zu bilden. Der Träger kann beispielsweise im wesentlichen als keilförmiger Kasten ausgebildet sein und im Bereich der Keilspitze am zweiten Basisteil angelenkt sein. Das zweite Teil des zweiten Teilepaares wird dann vorzugsweise im Bereich des der Keilspitze gegenüberliegenden Keilfusses durch den Träger getragen.

Zur Betätigung des Schwenkgelenks kann ein länglicher Antriebshebel an einem seiner Längsenden fest am Träger befestigt sein. Der Antriebshebel kann derart am Träger befestigt sein, dass er mit diesem im Bereich der Schwenkachse einen Winkel einschliesst. Vorzugsweise sind der Träger und der Antriebshebel im wesentlichen als einstückige Wippe ausgebildet, wobei der Träger einen ersten Arm der Wippe und der Antriebshebel einen zweiten Arm der Wippe bildet und die Wippe derart am zweiten Basisteil der Bewegungsvorrichtung angelenkt ist, dass sie im Bereich des Verbindungswinkels zwischen den beiden Armen um die Schwenkachse herum schwenkbar ist.

Gemäss einer bevorzugten Ausführungsart der Erfindung weist die Bewegungsvorrichtung Antriebsmittel zur Betätigung des Schwenkgelenks auf, die eine Antriebsspindel (im folgenden auch als Gelenkantriebsspindel bezeichnet) umfassen. Vorzugsweise ist die Gelenkantriebsspindel um ihre Achse drehbar in Lagern gelagert, die am zweiten Basisteil befestigt sind, um nach Art eines Spindel-Mutter-Triebes eine Mutter anzutreiben. Im Falle eines nach Art einer Wippe ausgebildeten Trägers mit einem Antriebshebel kann die Mutter über einen Umlenkmechanismus gelenkig mit dem Antriebshebel verbunden sein, um den Antriebshebel und dadurch den fest mit dem Antriebshebel verbundenen Träger zu einer Schwenkbewegung um die Schwenkachse anzutreiben. Vorzugsweise ist die Gelenkantriebsspindel parallel zur Linearführung für das bewegliche Basisteil angeordnet. In diesem Fall kann die durch die Gelenkantriebsspindel angetriebene Mutter durch eine zur Linearführung für das bewegliche Basisteil parallele Führung geführt werden, wobei zur Führung der durch die Gelenkantriebsspindel angetriebenen Mutter entweder eine separate Führung oder die Linearführung des Basisteils selbst verwendet werden kann.

Falls bei der Erfindungsvariante mit beweglichem zweiten Basisteil (an welchem der Träger angelenkt ist) die Gelenkantriebsspindel am zweiten Basisteil gelagert ist, stellt die Bewegungsvorrichtung eine serielle Maschinenkinematik dar: die Antriebsmittel für die Gelenkbetätigung (d.h. für den zweiten translatorischen Freiheitsgrad) werden auf dem mit dem ersten translatorischen Freiheitsgrad bewegbaren Basisteil mitgetragen. Bei dieser Anordnung sind die Antriebe der beiden translatorischen Freiheitsgrade voneinander entkoppelt: den Antriebsmitteln zur Bewegung des zweiten Basisteils entlang der Linearführung ist der erste und den Gelenkbetätigungsmitteln der zweite translatorische Freiheitsgrad der Bewegungsvorrichtung zugeordnet.

Als Alternative zur seriellen Anordnung der Antriebe für die beiden translatorischen Freiheitsgrade kann auch eine parallele Maschinenkinematik verwirklicht werden, indem die Gelenkantriebsspindel um ihre Achse drehbar in Lagern gelagert wird, die - wie z.B. auch die Linearführung für den ersten translatorischen Freiheitsgrad - an der Basisstruktur befestigt sind. Bei dieser Anordnung ist jedoch der Antrieb des zweiten translatorischen Freiheitsgrades vom Antrieb des ersten translatorischen Freiheitsgrades abhängig: wird das zweite Basisteil entlang der Linearführung ohne gleichzeitige Betätigung der Gelenkantriebsspindel bewegt, so wird gleichzeitig auch das Schwenkgelenk betätigt und die Bewegungsvorrichtung mit dem zweiten translatorischen Freiheitsgrad bewegt. Bei den parallelkinematischen Varianten der Erfindung werden sowohl für den Gelenkantrieb als auch für den Antrieb des beweglichen Basisteils entlang der Linearführung anstelle von Spindeln vorteilhafterweise ein Linearantriebe verwendet, da diese im Vergleich zu Spindeln wesentlich höhere Vorschubgeschwindigkeiten ermöglichen.

Zur Betätigung des Schwenkgelenks (d.h., um den Träger bezüglich des zweiten Basisteils um die Schwenkachse zu bewegen) können anstelle der oben beschriebenen Gelenkbetätigungsmittel auch andere geeignete Antriebsmittel zum Antreiben eines Schwenkgelenks verwendet werden. So können die Gelenkbetätigungsmittel beispielsweise eine direkt angetriebene Rundachse umfassen. Als Alternative können die Gelenkbetätigungsmittel auch irgend einen geeigneten Linearantrieb umfassen, der zwischen dem Träger und dem zweiten Basisteil wirkt. Beispielsweise kann ein solcher Linearantrieb aus einer einen Kolben und einen Zylinder umfassenden hydraulischen Hubvorrichtung bestehen. Als weitere Variante kann der Träger durch eine am zweiten Basisteil um eine zur Schwenkachse des Trägers parallele Schwenkachse angelenkte Gelenkantriebsspindel betätigt werden, die eine am Träger angelenkte Mutter nach Art eines Spindel-Mutter-Triebs antreibt.

Gemäss einer weiteren bevorzugten Ausführungsart der Erfindung ist mittels eines zweiten Schwenkgelenks um eine zur Schwenkachse des Trägers parallele Schwenkachse schwenkbar am zweiten Basisteil ein Lenkarm angelenkt, wobei der Lenkarm an seinem vom zweiten Basisteil abgewandten Längsende über einen sowohl am Lenkarm als auch am Träger angelenkten Verbindungslenker mit dem Träger derart verbunden ist, dass er zusammen mit dem Träger einen Parallelogrammlenker bildet, dessen Verbindungslenker das zweite Teil des zweiten Teilepaares auf einer Kreisbahn translatorisch beweglich trägt. Diese Ausführungsart der Erfindung ist insbesondere dann vorteilhaft, wenn die Arbeitsspindel der Spindeleinrichtung nicht parallel zur Schwenkachse des Schwenkgelenks angeordnet ist. Da in diesem Fall im allgemeinen für die Werkstückbearbeitung die Drehlage des am Träger getragenen zweiten Teils des zweiten Teilepaares bezüglich der Schwenkachse berücksichtigt werden muss, ist eine Entkopplung der Bewegung mit den beiden translatorischen Freiheitsgraden von der Drehbewegung des zweiten Teils um die Schwenkachse wünschenswert. Durch den Parallelogrammlenker wird diese Entkopplung erreicht. Eine Bewegungsvorrichtung gemäss dieser bevorzugten Ausführungsart der Erfindung kann beispielsweise in vorteilhafter Art für die Bearbeitung eines Arbeitsstücks mittels einer vertikalen Arbeitsspindel eingesetzt werden, wobei die vertikale Arbeitsspindel im wesentlich parallel zur linearen Führungseinrichtung für den ersten Freiheitsgrad der Bewegungsvorrichtung angeordnet ist.

Eine weitere bevorzugte Variante der Erfindung zeichnet sich dadurch aus, dass die Bewegungsvorrichtung ein weiteres Basisteil umfasst, an welchem mittels eines weiteren Schwenkgelenks um eine rechtwinklig zur Linearführung angeordnete weitere Schwenkachse schwenkbar ein weiterer Träger zum Tragen einer weiteren Spindeleinrichtung derart angelenkt ist, dass die weitere Spindeleinrichtung durch eine Betätigung des weiteren Schwenkgelenks translatorisch auf einer Kreisbahn bewegbar ist. Dadurch kann eine Bewegungsvorrichtung geschaffen werden, die für eine nach dem Zweispindel-Konzept konstruierte Werkzeugmaschine geeignet ist.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen. So versteht es sich z.B. für einen Fachmann auf dem Gebiet des Werkzeugmaschinenbaus von selbst, dass die translatorischen Freiheitsgrade der Relativbewegung zwischen einem Werkzeug und einem Werkstück beliebig auf das Werkstück und das Werkzeug verteilt werden können.

### Kurze Beschreibung der Zeichnungen

Die zur Erläuterung der Ausführungsbeispiele verwendeten Zeichnungen zeigen:
- Fig. 1: eine erste bevorzugte Ausführungsart einer erfindungsgemässen Bewegungsvorrichtung in einer vereinfachten, teilweise geschnittenen Ansicht von vorne;
- Fig. 2: die Bewegungsvorrichtung aus Figur 1 in einer vergrösserten Teilansicht;
- Fig. 3: die Bewegungsvorrichtung aus Figur 1 in einer Seitenansicht;
- Fig. 4: eine weitere bevorzugte Ausführungsart einer erfindungsgemässen Bewegungsvorrichtung in einer vereinfachten, teilweise geschnittenen Ansicht von vorne;
- Fig. 5: vereinfachte Teilansicht einer Bewegungsvorrichtung gemäss einer weiteren bevorzugten Ausführungsart der Erfindung.

Grundsätzlich sind in den Figuren gleiche Teile mit gleichen Bezugszeichen versehen.

### Wege zur Ausführung der Erfindung

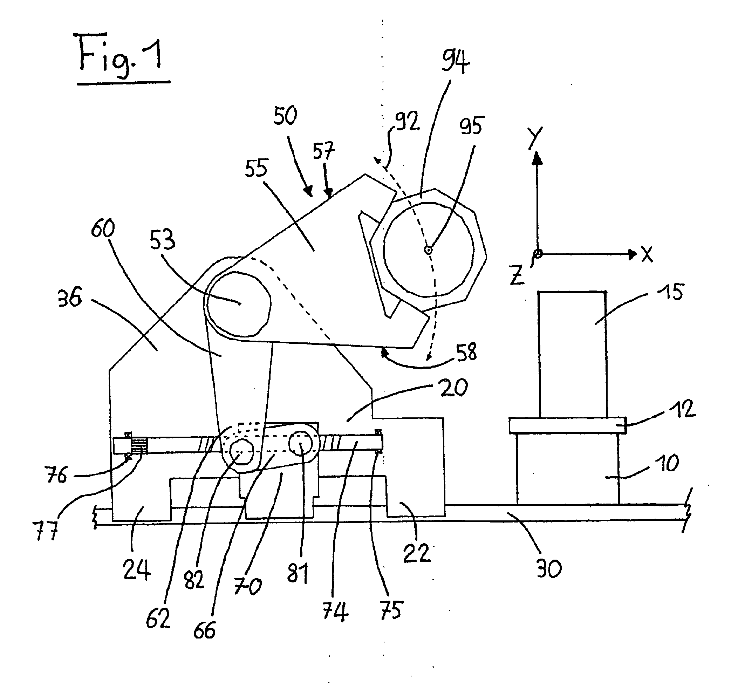

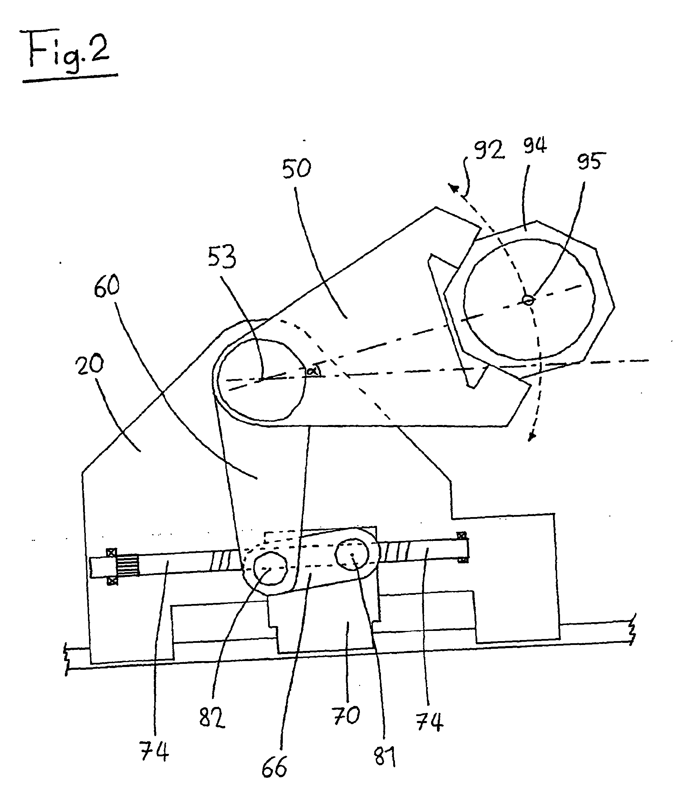

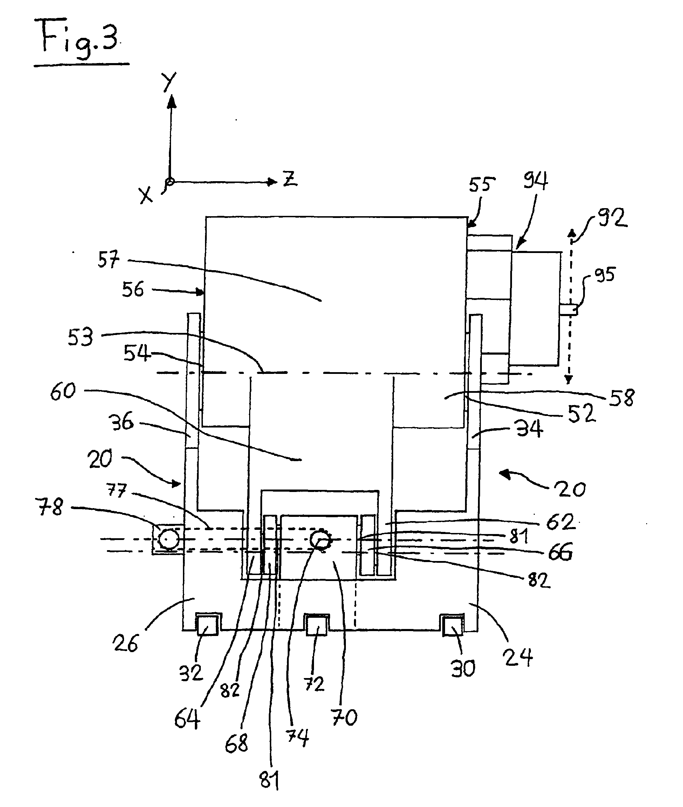

Die Figuren 1 und 2 zeigen eine erste bevorzugte Ausführungsart einer erfindungsgemässen Bewegungsvorrichtung in einer vereinfachten, teilweise geschnittenen Ansicht von vorne. Die Figur 3 zeigt diese Bewegungsvorrichtung in einer Seitenansicht.

Die gesamte Bewegungsvorrichtung ist auf einer massiven Basisstruktur bzw. einem Maschinenbett (nicht dargestellt) angeordnet, das in für Werkzeugmaschinen bekannter Art konstruiert ist. Auf dem Maschinenbett ist ein erstes Basisteil 10 in Form eines fest und unverschieblich mit dem Maschinenbett verbundenen Sockels 10 angeordnet. Der Sockel 10 kann als integraler Bestandteil des Maschinenbettes ausgebildet sein. Auf dem Sockel 10 ist ein Halteorgan 12 in Form einer Werkstückplattform 12 befestigt, welche mittels einer Werkstückhalterung (nicht dargestellt) das zu bearbeitende Werkstück 15 festhält.

Auf dem Maschinenbett ist weiter eine Linearführung in Form von zwei parallelen, für Werkzeugmaschinen gebräuchlichen Führungsschienen 30, 32 befestigt. Diese geraden Führungsschienen 30, 32 seitlich neben dem Sockel 10 vorbeilaufend angeordnet und definieren die X-Richtung der Bewegungsvorrichtung.

Auf den beiden Führungsschienen 30, 32 ist ein zweites Basisteil 20 der Bewegungsvorrichtung in Form eines entlang der Führungsschienen 30, 32 mit genau einem translatorischen Freiheitsgrad verschieblichen Gestells 20 angeordnet. Zum Zwecke der Verschiebbarkeit in X-Richtung ist das Gestell 20 mit vier Fahrgliedern oder Schlitten 22, 24, 26 versehen, die mit den beiden Schienen 30, 32 zusammenwirken, um das Gestell 20 in X-Richtung beweglich zu führen, wobei zwei Fahrglieder 22, 24 auf der einen Führungsschiene 30 und zwei Fahrglieder 26 auf der anderen Führungsschiene 32 angeordnet sind. Die lineare Verschieblichkeit des Gestells 20 entlang der Führungsschienen 30, 32 verwirklicht den ersten translatorischen Freiheitsgrad der in den Figuren 1 bis 3 dargestellten Bewegungsvorrichtung.

Die Bewegungsvorrichtung umfasst weiter eine Antriebsvorrichtung, um das Gestell 20 in X-Richtung entlang der Führungsschienen 30, 32 anzutreiben. Der Übersichtlichkeit halber ist die Antriebsvorrichtung für den ersten translatorischen Freiheitsgrad in den Zeichnungen nicht dargestellt. Die Antriebsvorrichtung für den ersten Freiheitsgrad umfasst eine parallel zu den Führungsschienen 30, 32 angeordnete und in fest auf dem Maschinenbett angebrachten Lagern gelagerte Antriebsspindel (auch als Zug- oder Leitspindel bezeichnet), welche mit einer am Gestell 20 befestigten Mutter nach Art eines Spindel-Mutter-Triebes (vorzugsweise vom Typ einer Kugelumlaufspindel) zusammenwirkt. Es können jedoch auch andere geeignete Antriebsmittel zum Antreiben des Gestells 20 in X-Richtung verwendet werden, beispielsweise Antriebsmittel in Form eines oder mehrerer Linearmotoren.

In den Figuren 1, 3 und 4 ist weiter der Übersichtlichkeit halber jeweils der vordere Teil des Gestells 20 teilweise weggeschnitten (insbesondere die vordere Stützwand 34 der nachfolgend beschriebenen beiden Stützwänden 34, 36), um die in Wirklichkeit dahinter verdeckten Teile der Bewegungsvorrichtung sichtbar zu machen. Weiter ist zur Verbesserung der Übersichtlichkeit in diesen Figuren das Gestell 20 in einer von der Werkstückplattform 12 verschobenen Position dargestellt. Es versteht sich von selbst, dass zur Bearbeitung des Werkstückes 15 das Gestell 20 auf den Führungsschienen 30, 32 derart positioniert wird, dass das Werkstück 15 in der Verlängerung der Pinolenachse 95 angeordnet ist.

Das Gestell 20 ist in Leichtbauweise ausgebildet und besteht aus mehreren verrippten Metallblechen, die zu einer steifen dreidimensionalen Tragstruktur zusammengeschweisst sind. Es versteht sich von selbst, dass bei anderen, nicht in den Figuren dargestellten Ausführungsarten der Erfinung das Gestell in für den Werkzeugmaschinenbau bekannter Weise auch aus Guss, Keramik, CFK (Kohlenstofffaser-verstäkten Kunststoffen) oder anderen geeigneten Materialien ausgeführt sein kann. Das Gestell 20 umfasst zwei im wesentlichen parallel zu den Führungsschienen 30, 32 angeordnete Stützwände 34, 36, die mit zwei rechtwinklig zu den Führungsschienen 30, 32 angeordneten, zueinander fluchtenden Bohrungen versehen sind. In den beiden Bohrungen ist je ein Lager angeordnet, um die Achszapfen 52, 54 des nachfolgend beschriebenen Trägers 50 aufzunehmen.

Der Träger 50 der in den Figuren 1 bis 3 dargestellten Bewegungsvorrichtung hat zusammen mit seinem Antriebsarm 60 im wesentlichen die Form einer Wippe mit einem sehr steif ausgebildeten Anlenkhebel 60. Ein Arm 50 der Wippe dient als Träger 50 zum Tragen einer Spindeleinrichtung, welche bei den in den Figuren dargestellten Ausführungsarten der Erfindung aus einer Pinole 95 besteht, während der andere Wippenarm 60 als Anlenkhebel 60 für den Antrieb der Wippe dient. An der Verbindungsstelle der beiden winkelförmig angeordneten Arme 50, 60 sind an der Wippe zwei Achszapfen 52, 54 angeformt, welche eine senkrecht zur Winkelebene stehende Achse 53 definieren. Die beiden Achszapfen 52, 53 sind in den oben erwähnten Lagern in den Stützwänden 34, 36 des Gestells 20 gelagert. Durch diese Anordnung ist die Wippe mittels des durch die Lager und die Achszapfen 52, 54 gebildeten Schwenkgelenks um die durch die Achszapfen 52, 54 definierte Schwenkachse 53 schwenkbar am Gestell 20 angelenkt, wobei die Schwenkachse 53 rechtwinklig zu den beiden Führungsschienen 30, 32 der Linearführung in X-Richtung angeordnet ist. Die Richtung der Schwenkachse 53 wird als Z-Richtung und die zur X-Richtung und zur Z-Richtung in einem rechten Winkel stehende Richtung als Y-Richtung der Bewegungsvorrichtung definiert.

Der als Pinolenträger ausgebildete Arm 50 der Wippe ist kastenförmig ausgebildet, um ihm eine möglichst grosse Steifigkeit zu verleihen. Er ist wiederum in Leichtbauweise aus mehreren verrippten Blechen zusammengesetzt, um eine feste dreidimensionale Tragstruktur mit einer hohen Steifigkeit zu bilden. Selbstverständlich kann bei anderen, nicht in den Figuren dargestellten Ausführungsarten der Erfinung die den Pinolenträger und den Anlenkhebel umfassende Wippe in für den Werkzeugmaschinenbau bekannter Weise aus Guss, Keramik CFK (Kohlenstofffaser-verstäkten Kunststoffen) oder anderen geeigneten Materialien ausgeführt sein kann.

Der kastenförmige Pinolenträger 50 hat im wesentlichen die Form eines Keils, mit zwei parallelen trapezförmigen Wänden 55, 56 und zwei die trapezförmigen Wände verbindenden, im wesentlichen rechteckigen Wänden 57, 58, welche die Keilflächen 57, 58 bilden. Bei der als Rundung ausgebildeten Keilspitze sind an den beiden trapezförmigen Wänden 55, 56 die oben erwähnten Achszapfen 52, 54 angeformt. An dem der Keilspitze gegenüberliegenden Keilfuss des Trägers 50 ist mittels einer Antriebs- und Führungseinrichtung (nicht dargestellt) in Z-Richtung verschieblich die Pinole 95 mitsamt dem Pinolenspindelantrieb und einem entsprechenden Pinolengehäuse 94 angeordnet, wobei die Pinolenspindel parallel zur Schwenkachse 53 (d.h. in Z-Richtung) ausgerichtet ist. Der in den Zeichnungen 1 bis 3 in unterbrochenen Linien dargestellte Doppelpfeil 92 stellt die Bewegung mit dem zweiten translatorischen Freiheitsgrad dar, welche die Pinole 95 bei einer Betätigung des Schwenkgelenks um die Schwenkachse 53 ausführt.

Wie im Werkzeugmaschinenbau allgemein bekannt, können einzelne Bewegungsachsen der Relativbewegung zwischen einem Werkzeug und einem Werkstück entweder auf das Werkzeug oder auf das Werkstück verlagert werden. So wird bei einer nicht in den Figuren dargestellten Variante einer erfindungsgemässen Bewegungsvorrichtung die Translationsbewegung in Z-Richtung durch das Werkstück ausgeführt, indem die Werkstückplattform entlang einer weiteren Linearführung in Z-Richtung verschiebbar angeordnet ist. Bei dieser Bewegungsvorrichtung ist die Pinole fest, d.h. in in Z-Richtung unverschieblich, am schwenkbaren Pinolenträger angebracht.

Der Antriebsarm 60 dient der Betätigung der Wippe und somit des Trägers 50 um die Schwenkachse 53 herum. Zur Betätigung der Wippe weist die Bewegungsvorrichtung eine Gelenkantriebsspindel 74 auf, die parallel zu den beiden Führungsschienen 30, 32 und ungefähr in der Mitte oberhalb dieser Führungsschienen 30, 32 um ihre Achse drehbar in Lagern 75, 76 gelagert ist, die am Gestell 20 befestigt sind. Die Gelenkantriebsspindel 74 ist in einem Zwischenraum zwischen den beiden Stützwänden 34, 36 des Gestells 20 angeordnet. Zwischen den beiden Führungsschienen 30, 32 und parallel zu diesen ist eine weitere gerade Führungsschiene 72 am Maschinenbett befestigt, die der Führung des nachfolgend beschriebenen Gelenkantriebsfahrgliedes 70 in X-Richtung dient. Diese weitere Führungsschiene 72 ist ungefähr in der Mitte zwischen den beiden Führungsschienen 30, 32 unterhalb der Gelenkantriebsspindel 74 angeordnet.

Die Gelenkantriebsspindel wird über einen Zahnriemen 77 durch einen am Gestell 20 angeflanschten Motor 78 zur Drehung um ihre Achse angetrieben. Die Gelenkantriebsspindel 74 wirkt mit einer Mutter an einem Gelenkantriebsfahrglied 70 nach Art eines Spindel-Mutter-Triebes (vorzugsweise vom Typ einer Kugelumlaufspindel) zusammen, wobei die Mutter 70 und das Gelenkantriebsfahrglied 70 als ein einstückiges integrales Teil 70 ausgebildet sind. Das Gelenkantriebsfahrglied 70 ist in einem zum Maschinenbett hin offenen und parallel zur Gelenkantriebsspindel 74 verlaufenden Schacht innerhalb des Gestells 20 in X-Richtung verschieblich angeordnet, wobei es in X-Richtung durch die weitere Führungsschiene 72 geführt wird.

Das von der Schwenkachse 53 abgewandte Längsende des Antriebsarms 60 ist gabelförmig ausgebildet und weist zwei schenkelförmige Verlängerungen 62, 64 mit einem dazwischenliegenden U-förmigen Durchgang auf. Diese beiden seitlichen Verlängerungen 62, 64 des Antriebsarms 60 sind je über einen länglichen Umlenkarm 66, 68 gelenkig mit dem Gelenkantriebsfahrglied 70 verbunden. Der erste Umlenkarm 66 ist um ein erstes Drehgelenk 81 schwenkbar an einer ersten zur Gelenkantriebsspindel 74 parallelen Seitenwand des Gelenkantriebsfahrgliedes 70 und um ein zweites Drehgelenk 82 schwenkbar an der einen 62 der beiden schenkelförmigen Verlängerungen 62, 64 des Antriebsarmes 60 angelenkt. Der zweite Umlenkarm 68 ist um das erste Drehgelenk 81 schwenkbar an einer zur ersten Seitenwand parallelen Seitenwand des Gelenkantriebsfahrgliedes 70 und um ein zweites Drehgelenk 82 schwenkbar an der anderen 64 der beiden schenkelförmigen Verlängerungen 62, 64 des Antriebsarmes 60 angelenkt. Durch den die beiden Drehgelenke 81, 82 und die beiden Umlenkarme 66, 68 umfassenden Umlenkmechanismus wird die geradlinige Antriebsbewegung des Gelenkantriebsfahrgliedes 70 in eine kreisförmige Bewegung des Antriebsarmes 60 und somit auch des Trägers 50 umgelenkt.

Bei der in den Figuren 1 und 2 dargestellten Stellung der Bewegungsvorrichtung greift der U-förmige Durchgang des Bewegungsarmes 60 über die Umlenkhebel 66, 68, das Gelenkantriebsfahrglied 70 und die Gelenkantriebsspindel 74. Die U-förmige Ausbildung des von der Schwenkachse 53 abgewandten Längsendes des Antriebsarms 60 erlaubt es, ungünstige (gestreckte) Winkelstellungen zwischen dem Antriebsarm 60 und den Umlenkhebeln 66, 68 zu vermeiden. Dies ist vorteilhaft hinsichtlich einer hochdynamischen Betätigung der in den Figuren dargestellten Bewegungsvorrichtung, weil dann eine ausgeglichenere Kraftverteilung resultiert.

Bei der in den Figuren 1 bis 3 dargestellten Ausführungsform der Erfindung sind der Träger 50 und das Gestell 20 derart ausgebildet, dass der Träger 50 in einem Winkelbereich von ungefähr 60 Grad um die Schwenkachse 53 herum schwenkbar ist, wobei der Trägerwinkel α bezüglich der X-Richtung in der von der Linearführung entferntesten Position der Pinole 95 ungefähr +45 Grad und in der zur Linearführung nächsten Position ungefähr - 15 Grad beträgt.

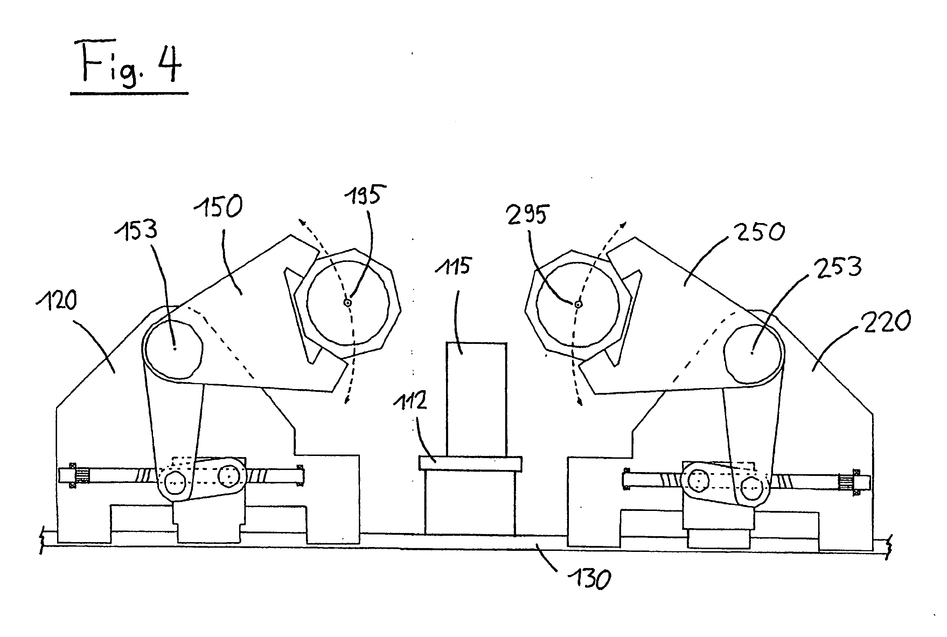

In der Figur 4 ist eine weitere bevorzugte Ausführungsart einer erfindungsgemässen Bewegungsvorrichtung in einer vereinfachten, teilweise geschnittenen Ansicht von vorne dargestellt. Die in der Figur 4 dargestellte Bewegungsvorrichtung umfasst eine zu den in den Figuren 1 bis 3 identische Bewegungsvorrichtung mit einem Halteorgan 112, welches das zu bearbeitende Werkstück 115 festhält, einem auf Führungsschienen 130, 132 in X-Richtung verschiebbaren Gestell 120, an welchem mittels eines Schwenkgelenks um eine rechtwinklig zu den Führungsschienen 130, 132 angeordnete Schwenkachse 153 schwenkbar ein Träger 150 zum Tragen einer Pinole 195 derart angelenkt ist, dass die Pinole 195 durch eine Betätigung des Schwenkgelenks translatorisch auf einer Kreisbahn bewegbar ist. Zusätzlich umfasst die in der Figur 4 dargestellte Bewegungsvorrichtung ein weiteres auf den Führungsschienen 130, 132 verschieblich angeordnetes Gestell 220, an welchem mittels eines weiteren Schwenkgelenks um eine rechtwinklig zu den Führungsschienen 130, 132 angeordnete weitere Schwenkachse 253 schwenkbar ein weiterer Träger 250 zum Tragen einer weiteren Pinole 295 derart angelenkt ist, dass die weitere Pinole 295 durch eine Betätigung des weiteren Schwenkgelenks translatorisch auf einer Kreisbahn bewegbar ist. Das weitere Gestell 220 und die daran angebrachten Komponenten sind spiegelbildlich zum ersten Gestell 120 und den daran angebrachten Komponenten angeordnet.

Die in der Figur 4 dargestellte Bewegungsvorrichtung ist für eine nach dem Zweispindel-Konzept konstruierte Werkzeugmaschine geeignet.

In der Figur 5 ist in einer der Figur 2 entsprechenden Teilansicht eine Bewegungsvorrichtung gemäss einer weiteren bevorzugten Ausführungsart der Erfindung dargestellt. Die in der Figur 5 dargestellte Bewegungsvorrichtung umfasst ein Gestell 320, das mit einem translatorischen Freiheitsgrad verschieblich auf geradlinigen Führungsschienen 330 angeordnet ist. Am Gestell 320 ist ein länglicher Trägerarm 350 an einem seiner Längsenden um eine zur Richtung der Führungsschienen 330 rechtwinkligen Schwenkachse 353 schwenkbar angelenkt, wobei das den Trägerarm 350 mit dem Gestell 320 verbindende Schwenkgelenk wiederum steif und massiv ausgebildet ist. Am andern Längsende trägt der Trägerarm 350 eine Pinole 395 mit einer zur Schwenkachse 353 parallelen Pinolenspindel 395.

Zur Betätigung des Trägerarms 350 um das Schwenkgelenk 353 ist an der Gestellbasis eine Antriebsspindel 374 mittels eines ersten Drehgelenks 381 schwenkbar befestigt, dessen Achse zur Schwenkachse 353 des Trägerarms 350 parallel ist. Die Antriebsspindel 374 ist mit geeigneten Spindelantriebsmitteln versehen, um eine Mutter 370 nach Art eines Spindel-Mutter-Triebs translatorisch entlang der Spindelachse 374 zu verschieben. Die Mutter 370 ist mittels eines zweiten Drehgelenks 382, dessen Achse zur Schwenkachse 353 des Trägerarms 350 parallel ist, schwenkbar am Trägerarm 350 befestigt, um diesen auf einer Kreisbahn um die Schwenkachse 353 herum zu bewegen.

Zusammenfassend ist festzustellen, dass durch die Erfindung eine Vorrichtung zur Erzeugung einer Relativbewegung zwischen einer Spindeleinrichtung und einem Halteorgan geschaffen wird, die vergleichsweise einfach zu fertigen ist, dynamisch ist und zudem ein grosses Verhältnis von nutzbarem Arbeitsraum zum benötigten Bauraum aufweist.

## Patentansprüche

1. Vorrichtung zur Erzeugung einer Relativbewegung mit einer Spindeleinrichtung (95, 195, 295, 395), deren Spindel ein erstes Teil eines aus einem Werkstück (15, 115) und einem Werkzeug gebildeten ersten Teilepaares trägt, einem Halteorgan (12, 112) zum Halten des zweiten Teiles (15, 115) des ersten Teilepaares, einem ersten Basisteil (10), an welchem ein erstes Teil (12, 112) eines aus der Spindeleinrichtung (95, 195, 295, 395) und dem Halteorgan (12, 112) gebildeten zweiten Teilepaares angebracht ist, einem zweiten Basisteil (20, 120, 220, 320), wobei wenigstens eines (20, 120, 220, 320) der beiden Basisteile bezüglich des anderen (10) entlang einer Linearführung (30, 32, 130, 330) mit einem ersten translatorischen Freiheitsgrad geradlinig bewegbar ist, und einem mittels eines Schwenkgelenks um eine rechtwinklig zur Linearführung (30, 32, 130, 330) angeordneten Schwenkachse (53, 153, 253, 353) schwenkbar am zweiten Basisteil (20, 120, 220, 320) angelenkten Träger (50, 150, 250, 350) zum Tragen des zweiten Teils (95, 195, 295, 395) des zweiten Teilepaares derart, dass das zweite Teil (95, 195, 295, 395) des zweiten Teilepaares durch eine Betätigung des Schwenkgelenks mit einem zweiten translatorischen Freiheitsgrad auf einer Kreisbahn bewegbar ist, wobei die Linearführung (30, 32, 130, 330) seitlich neben dem ersten Basisteil (10) vorbeilaufend angeordnet ist und wobei die Spindel parrallel zur Schwenkachse (53, 153, 253, 353) ausgerichtet und die Spindeleinrichtung (95, 195, 295, 395) mittels einer Antriebs- und Führungseinrichtung parallel zur Schwenkachse (53, 153, 253, 353) bezüglich dem Halteorgan (12, 112) verschiebbar ist, wobei der Träger (50, 150, 250, 350) am zweiten Basisteil (20, 120, 220, 320) derart angeordnet ist, dass der Träger (50, 150, 250, 350) im Wesentlichen parallel zur Linearführung (30, 32, 130, 330) ausrichtbar ist.

2. Vorrichtung nach Anspruch 1, **dadurch gekennzeichnet, dass** die Spindeteinrchtung (95, 195, 295, 395) aus einer Pinole (95, 195, 295, 395) besteht, welche mitsamt einem Pinolenspindelantrieb mittels der Antriebs- und Führungseinrichtung parallel zur Schwenkachse (53, 153, 253, 353) verschiebbar am Träger (50, 150, 250, 350) angeordnet ist.

3. Vorrichtung nach Anspruch 1 oder 2, **dadurch gekennzeichnet, dass** der erste Basisteil (10) auf einem Maschinenbett fest und unverschieblich angeordnet ist.

4. Vorrichtung nach Anspruch 3, **gekennzeichnet durch** eine Ausbildung des Trägers (50, 150, 250) und des zweiten Basisteils derart, dass der Träger in einem Winkelbereich von 60 Grad um die Schwenkachse schwenkbar ist, wobei der Winkelbereich **durch** einen ersten, um 40 Grad von der Parallelrichtung zur Linearführung (30, 32, 130) auf eine erste Seite abweichenden Winkel (α) und **durch** einen zweiten, um -20 Grad von der Parallelrichtung zur Linearführung (30, 32, 130) auf die andere Seite abweichenden Winkel (α) definiert wird.

5. Vorrichtung nach einem der Ansprüche 1 bis 4, **dadurch gekennzeichnet, dass** parallel zu der Linearführung (30, 32, 130) ein Gelenkantriebsfahrglied in X-Richtung vorgesehen ist, welches über einen Umlenkmechanismus eine Bewegung des Trägers (50) auf der Kreisbahn bewirkt.

6. Vorrichtung nach einem der Ansprüche 1 bis 5, **dadurch gekennzeichnet, dass** das zweite Basisteil (20, 120, 220, 320) parallel zur Linearführung (30, 32) angeordnete Stützwände (34, 36) hat, die mit Bohrungen mit Lagern für den Träger (50) versehen sind.

7. Vorrichtung nach einem der Ansprüche 1 bis 5, **dadurch gekennzeichnet, dass** die Linearführung zwei Schienen aufweist und dass als zweites Basisteil (20) ein Gestell mit vier Fahrgliedern (22, 24, 26) vorgesehen ist, welche auf den Schienen (30, 32) verfahrbar sind.

8. Vorrichtung nach einem der Ansprüche 1 bis 7, **dadurch gekennzeichnet, dass** der Träger (50, 150, 250, 350) nach Art eines Kastens ausgebildet ist, um eine dreidimensionale Tragstruktur mit einer hohen Steifigkeit zu bilden.

9. Vorrichtung nach Anspruch 8, **dadurch gekennzeichnet, dass** der Träger (50, 150, 250) nach Art eines keilförmigen Kastens ausgebildet und im Bereich der Keilspitze am zweiten Basisteil (20, 120, 220) angelenkt ist.

10. Vorrichtung nach einem der Ansprüche 1 bis 9, **gekennzeichnet durch** Antriebsmittel zur Betätigung des Schwenkgelenks, welche eine Gelenkantriebsspindel (74) umfassen, die um ihre Achse drehbar in Lagern gelagert ist, welche am zweiten Basisteil (20, 120, 220) befestigt sind.

11. Vorrichtung nach Anspruch 10, **dadurch gekennzeichnet, dass** die Gelenkantriebsspindel (74) parallel zur Linearführung (30, 32, 130, 330) angeordnet ist.

12. Vorrichtung nach einem der Ansprüche 1 bis 11, **dadurch gekennzeichnet, dass** zur Betätigung des Schwenkgelenks ein länglicher Antriebshebel (60) an einem Längsende unter einem Winkel fest am Träger (50, 150, 250) derart angeordnet ist, dass der Träger (50, 150, 250) mit dem Antriebshebel (60) zusammen eine im Wesentlichen einstückige, zweiarmige Wippe bildet, wobei der eine Arm durch den Träger (50, 150, 250) und der andere Arm durch den Antriebshebel (60) gebildet werden und die Wippe in ihrem Winkel um die Schwenkachse (53, 153, 253) herum schwenkbar ist.

13. Vorrichtung nach Anspruch 12 und einem der Ansprüche 10 oder 11, **dadurch gekennzeichnet dass** die Gelenkantriebsspindel (74) nach Art eines Spindel-Mutter-Triebes eine über einen Umlenkmechanismus (66, 68, 81, 82) gelenkig mit dem Antriebshebel (60) der Wippe verbundene Mutter (70) antreibt.

14. Vorrichtung nach einem der Ansprüche 1 bis 13, **gekennzeichnet durch** einen mittels eines zweiten Schwenkgelenks um eine zur Schwenkachse des Trägers parallele Schwenkachse schwenkbar am zweiten Basisteil angelenkten Lenkarm, wobei der Lenkarm an seinem vom zweiten Basisteil abgewandten Längsende über einen sowohl am Lenkarm als auch am Träger angelenkten Verbindungslenker mit dem Träger derart verbunden ist, dass er zusammen mit dem Träger einen Parallelogrammlenker bildet, dessen Verbindungslenker das zweite Teil des zweiten Teilepaares auf einer Kreisbahn translatorisch beweglich trägt.

15. Vorrichtung nach einem der Ansprüche 1 bis 14, **gekennzeichnet durch** ein weiteres Basisteil (220), an welchem mittels eines weiteren Schwenkgelenks um eine rechtwinklig zur Linearführung (130) angeordnete weitere Schwenkachse (253) schwenkbar ein weiterer Träger (250) zum Tragen einer weiteren Spindeleinrichtung (295) derart angelenkt ist, dass die weitere Spindeleinrichtung (295) **durch** eine Betätigung des weiteren Schwenkgelenks translatorisch auf einer Kreisbahn bewegbar ist, um eine Bewegungsvorrichtung für eine nach dem Zweispindel-Konzept konstruierte Werkzeugmaschine zu bilden.

## Claims

1. Device for producing a relative motion, having a spindle device (95, 195, 295, 395), the spindle of which bears a first part of a pair of parts formed from a workpiece (15, 115) and a tool, having a retaining element (12, 112) for holding the second part (15, 115) of the first pair of parts, having a first base part (10), to which a first part (12, 112) of a second pair of parts formed from the spindle device (95, 195, 295, 395) and the retaining element (12, 112) is attached, having a second base part (20, 120, 220, 320), wherein at least one (20, 120, 220, 320) of the two base parts can be moved rectilinearly with respect to the other (10) along a linear guide (30, 32, 130, 330) with a first translatory degree of freedom, and having a support (50, 150, 250, 350) for bearing the second part (95, 195, 295, 395) of the second pair of parts, which support is coupled to the second base part (20, 120, 220, 320) so as to be able to swivel by means of a swivel joint about a swivel axis (53, 153, 253, 353) arranged at right angles to the linear guide (30, 32, 130, 330), such that the second part (95, 195, 295, 395) of the second pair of parts can be moved with a second translatory degree of freedom on a circular path by actuating the swivel joint, the linear guide (30, 32, 130, 330) being arranged so as to run past laterally next to the first base part (10), and the spindle being oriented parallel to the swivel axis (53, 153, 253, 353) and the spindle device (95, 195, 295, 395) being displaceable with respect to the retaining element (12, 112) parallel to the swivel axis (53, 153, 253, 353) by means of a driving and guiding device, the support (50, 150, 250, 350) being arranged on the second base part (20, 120, 220, 320) such that the support (50, 150, 250, 350) can be oriented essentially parallel to the linear guide (30, 32, 130, 330).

2. Device according to Claim 1, **characterized in that** the spindle device (95, 195, 295, 395) consists of a quill (95, 195, 295, 395), which together with a quill spindle drive is arranged on the support (50, 150, 250, 350) so as to be displaceable parallel to the swivel axis (53, 153, 253, 353) by means of the driving and guiding device.

3. Device according to Claim 1 or 2, **characterized in that** the first base part (10) is securely arranged on a machine bed in a stationary manner.

4. Device according to Claim 3, **characterized by** the support (50, 150, 250) and the second base part being constructed such that the support can be swivelled about the swivel axis in an angular range of 60 degrees, the angular range being defined by a first angle (α) which deviates by 40 degrees from the parallel direction to the linear guide (30, 32, 130) to a first side and by a second angle (α) which deviates by -20 degrees from the parallel direction to the linear guide (30, 32, 130) to the other side.

5. Device according to one of Claims 1 to 4, **characterized in that** an articulation-drive runner is provided in the X-direction parallel to the linear guide (30, 32, 130) and effects a movement of the support (50) on the circular path via a deflection mechanism.

6. Device according to one of Claims 1 to 5, **characterized in that** the second base part (20, 120, 220, 320) has supporting walls (34, 36) which are arranged parallel to the linear guide (30, 32) and are provided with holes having bearings for the support (50).

7. Device according to one of Claims 1 to 5, **characterized in that** the linear guide has two rails, and **in that** a frame with four runners (22, 24, 26) is provided as the second base part (20), which runners are movable on rails (30, 32).

8. Device according to one of Claims 1 to 7, **characterized in that** the support (50, 150, 250, 350) is made in the manner of a box in order to form a three-dimensional support structure with high stiffness.

9. Device according to Claim 8, **characterized in that** the support (50, 150, 250) is made in the manner of a wedge-shaped box and is articulated in the area of the tip of the wedge on the second base part (20, 120, 220).

10. Device according to one of Claims 1 to 9, **characterized by** drive devices for actuating the swivel joint which comprise an articulated drive spindle (74) which is supported so as to be able to rotate about its axis in bearings which are attached to the second base part (20, 120, 220).

11. Device according to Claim 10, **characterized in that** the articulated drive spindle (74) is arranged parallel to the linear guide (30, 32, 130, 330).

12. Device according to one of Claims 1 to 11, **characterized in that**, to actuate the swivel joint, an elongated drive lever (60) is securely arranged at one longitudinal end at an angle on the support (50, 150, 250) such that the support (50, 150, 250) together with the drive lever (60) forms an essentially one-piece, two-arm rocker, one arm being formed by the support (50, 150, 250) and the other arm being formed by the drive lever (60) and it being possible for the rocker to be swivelled in its angle about the swivel axis (53, 153, 253).

13. Device according to Claim 12 and either of Claims 10 and 11, **characterized in that** the articulated drive spindle (74) drives a nut (70) in the manner of a spindle-nut drive, which nut (70) is connected to the drive lever (60) of the rocker in an articulated manner via a deflection mechanism (66, 68, 81, 82).

14. Device according to one of Claims 1 to 13, **characterized by** a guide arm which is coupled by means of a second swivel joint to the second base part so as to be able to swivel about a swivel axis which is parallel to the swivel axis of the support, the guide arm being connected to the support at its longitudinal end facing away from the second base part via a connecting rod, coupled in an articulated manner to the guide arm and also the support, such that together with the support it forms a parallelogram drive-link, the connecting rod of which bears the second part of the second pair of parts on a circular path in a translatory movable manner.

15. Device according to one of Claims 1 to 14, **characterized by** a further base part (220), to which, by means of a further swivel joint, a further support (250) for bearing a further spindle device (295) is coupled so as to be able to swivel about a further swivel axis (253), arranged at right angles to the linear guide (130), such that the further spindle device (295) can be moved by actuation of the further swivel joint translatory on a circular path in order to form a movement apparatus for a machine tool built using the twin-spindle concept.

## Revendications

1. Dispositif pour la réalisation d'un mouvement relatif avec un dispositif à broche (95, 195, 295, 395), dont la broche porte une première pièce d'une premiere paire de pièces formée d'une pièce à usiner (15, 115) et d'un outil, avec un élément de maintien (12, 112) pour maintenir la deuxieme pièce (15, 115) de la premiere paire de pièces, avec une première pièce de base (10), sur laquelle est fixée une premiere pièce (12, 112) d'une deuxième paire de pièces formée par le dispositif à broche (95, 195, 295, 395) et par l'élément de maintien (12, 112), une deuxieme pièce de base (20, 120, 220, 320), au moins une (20, 120, 220, 320) des deux pièces de base étant mobile en ligne droite avec un premier degré de liberté en translation par rapport a l'autre (10) le long d'un guide linéaire (30, 32, 130, 330), et avec un support (50, 150, 250, 350) articulé, à l'aide d'une articulation pivotante, de manière pivotante autour d'un axe de pivotement (53, 153, 253, 353) disposé a angle droit par rapport au guide linéaire (30, 32, 130, 330) sur la deuxieme pièce de base (20, 120, 220, 320) et servant à porter la deuxième pièce (95, 195, 295, 395) de la deuxième paire de pièces, de telle manière que la deuxième pièce (95, 195, 295, 395) de la deuxième paire de pièces puisse être déplacée par un actionnement de l'articulation pivotante avec un deuxieme degré de liberté en translation selon une trajectoire circulaire, le guide linéaire (30, 32, 130, 330) étant disposé de façon à passer latéralement à côté de la première pièce de base (10) et la broche étant orientée parallèlement à l'axe de pivotement (53, 153, 253, 353) et le dispositif à broche (95, 195, 295, 395) pouvant être déplacé parallèlement à l'axe de pivotement (53, 153, 253, 353) par rapport à l'élément de maintien (12, 112) à l'aide d'un dispositif d'entraînement et de guidage, le support (50, 150, 250, 350) étant disposé sur la deuxième pièce de base (20, 120, 220, 320) de telle façon que le support (50, 150, 250, 350) peut être orienté sensiblement parallèlement au guide linéaire (30, 32, 130, 330) .

2. Dispositif selon la revendication 1, **caractérisé en ce que** le dispositif à broche (95, 195, 295, 395) se compose d'une douille (95, 195, 295, 395) qui, en même temps qu'un entrainement de broche a douille, est disposée sur le support (50, 150, 250, 350) de manière à pouvoir coulisser parallèlement à l'axe de pivotement (53, 153, 253, 353) a l'aide du dispositif d'entrainement et de guidage.

3. Dispositif selon la revendication 1 ou 2, **caractérisé en ce que** la première pièce de base (10) est disposée de manière fixe et immobile sur un banc de machine.

4. Dispositif selon la revendication 3, **caractérisé par** une configuration telle du support (50, 150, 250) et de la deuxième pièce de base que le support peut être pivoté dans une zone angulaire de 60 degrés autour de l'axe de pivotement, la zone angulaire étant définie par un premier angle (α) s'écartant sur un premier côté de 40 degrés de la direction parallele vers le guide linéaire (30, 32, 130) et par un deuxième angle (α) s'écartant sur l'autre côté de -20 degrés de la direction parallele vers le guide linéaire (30, 32, 130).

5. Dispositif selon l'une quelconque des revendications 1 à 4, **caractérisé en ce que** parallèlement au guide linéaire (30, 32, 130) est prévu un élément de roulement d'entraînement d'articulation dans la direction X, lequel provoque par l'intermédiaire d'un mécanisme de renvoi un mouvement du support (50) sur la trajectoire circulaire.

6. Dispositif selon l'une quelconque des revendications 1 à 5, **caractérisé en ce que** la deuxième pièce de base (20, 120, 220, 330) possède des parois de support (34, 36) disposées parallèlement au guide linéaire (30, 32), lesdites parois étant pourvues d'alésages avec des paliers pour le support (50).

7. Dispositif selon l'une quelconque des revendications 1 à 5, **caractérisé en ce que** le guide linéaire comporte deux rails et **en ce que** comme deuxième pièce de base (20) est prévu un bâti avec quatre éléments de roulement (22, 24, 26), lesquels peuvent se déplacer roulantements sur les rails (30, 32).

8. Dispositif selon l'une quelconque des revendications 1 à 7, **caractérisé en ce que** le support (50, 150, 250, 350) est configuré à la manière d'un caisson pour former une structure porteuse tridimensionnelle avec une grande rigidité.

9. Dispositif selon la revendication 8, **caractérisé en ce que** le support (50, 150, 250) est configuré à la manière d'un caisson cunéiforme et est articulé sur la deuxième pièce de base (20, 120, 220) dans la zone des pointes du coin.

10. Dispositif selon l'une quelconque des revendications 1 à 9, **caractérisé par** des moyens d'entraînement pour l'actionnement de l'articulation pivotante comprenant une broche d'entrainement d'articulation (74) qui, en pouvant tourner autour de son axe, est logée dans des paliers fixes sur la deuxième pièce de base (20, 120, 220).

11. Dispositif selon la revendication 10, **caractérisé en ce que** la broche d'entrainement d'articulation (74) est disposée en parallèle par rapport au guide linéaire (30, 32, 130, 330).

12. Dispositif selon l'une quelconque des revendications 1 a 11, **caractérisé en ce que**, pour actionner l'articulation pivotante, un levier d'entrainement de forme allongée (60) est disposé dans une position angulaire de maniere fixe à une extrémité longitudinale sur le support (50, 150, 250), de telle façon que le support (50, 150, 250) forme ensemble avec le levier d'entrainement (60) une bascule à deux bras sensiblement d'une seule pièce, l'un des bras étant forme par le support (50, 150, 250) et l'autre bras par le levier d'entrainement (60) et la bascule pouvant pivoter selon son angle autour de l'axe de pivotement (53, 153, 253).

13. Dispositif selon la revendication 12 et l'une quelconque des revendications 10 ou 11, **caractérisé en ce que** la broche d'entrainement d'articulation (74) entraine, à la maniere d'un mécanisme d'entrainement à broche et écrou, un écrou (70) relié de manière articulée au levier d'entrainement (60) de la bascule par l'intermédiaire d'un mécanisme de renvoi (66, 68, 81, 82) .

14. Dispositif selon l'une quelconque des revendications 1 a 13, **caractérisé par** un bras de guidage articulé de manière pivotante a l'aide d'une deuxième articulation pivotante sur la deuxième pièce de base autour d'un axe de pivotement parallèle à l'axe de pivotement du support, le bras de guidage, à son extrémité longitudinale opposée à la deuxième pièce de base, étant relié avec le support par l'intermédiaire d'une barre de guidage de liaison articulée aussi bien sur le bras de guidage que sur le support de telle manière qu'en liaison avec le support i1 forme une barre de guidage en forme de parallélogramme, dont la barre de guidage de liaison porte la deuxième pièce de la deuxième paire de pièces en permettant un mouvement de -translation sur une trajectoire circulaire.

15. Dispositif selon l'une quelconque des revendications 1 à 14, **caractérisé par** une autre pièce de base (220) sur laquelle, à l'aide d'une autre articulation pivotante, est articulé, de manière à pivoter autour d'un autre axe de pivotement (253) disposé à angle droit par rapport au guide linéaire (130), un autre support (250) servant à porter un autre dispositif à broche (295), de telle sorte que l'autre dispositif à broche (295) peut, pour former un dispositif de mise en mouvement pour une machine-outil conçue selon le concept à deux broches, être mis en mouvement de translation sur une trajectoire circulaire par l' actionnement de l'autre articulation pivotante.
